# EUROPÄISCHE PATENTSCHRIFT

(11) **EP 3 357 692 B1**
(45) Veröffentlichungstag und Bekanntmachung des Hinweises auf die Patenterteilung: **02.10.2019**
(21) Anmeldenummer: 18152003.2
(22) Anmeldetag: 17.01.2018
(51) Int. Cl.: B32B 38/18, B65H 20/30, F26B 13/14

(54) **VORRICHTUNG ZUR PUFFERUNG EINES BAHNFÖRMIGEN MATERIALS**
DEVICE FOR BUFFERING A WEB-FORMED MATERIAL
DISPOSITIF DE TAMPONNAGE D'UN MATÉRIAU EN FORME DE BANDE

(30) Priorität: 01.02.2017 DE 102017101953
(43) Veröffentlichungstag der Anmeldung: 08.08.2018
(73) Patentinhaber: Bundesdruckerei GmbH, 10969 Berlin (DE)
(72) Erfinder: Straub, Alexander, 83115 Neubeuern (DE)
(74) Vertreter: Mammel und Maser

(56) Entgegenhaltungen:
- DE-A1- 2 804 724
- US-A1- 2013 215 202
- US-B1- 6 257 520

## Beschreibung

Die Erfindung betrifft eine Vorrichtung zur Pufferung eines bahnförmigen Materials.

Aus der DE 10 2014 102 354 A1 ist ein Verfahren zur Herstellung eines Hologrammes auf einem bahnförmigen Material bekannt. Aus einer Vorratsrolle wird das bahnförmige Material abgezogen und einer Materialspeichereinrichtung zugeführt. Darauffolgend wird auf das bahnförmige Material mit einem Auftragswerk ein holografisches Material, insbesondere in Form einer partiellen Beschichtung, aufgebracht. Nach dem Belichten des holografischen Materials wird eine weitere Schicht, wie beispielsweise eine Glättfolie und/oder eine Lackschicht und/oder eine Schutzfolie, aufgebracht. Anschließend wird das bahnförmige Material mit dem holografischen Material als Hologramm und einer weiteren Schicht einer Materialspeichereinrichtung zugeführt, um darauffolgend das bahnförmige Material beispielsweise auf einer Rolle zu speichern.

Durch die Materialspeichereinrichtungen kann eine Pufferstrecke geschaffen werden. Dabei wird die Materialbahn durch zueinander beabstandete und aufeinanderfolgende Umlenkrollen gespeichert, wobei die Materialbahn abwechselnd an der einen und darauffolgend an der anderen Seite durch die Umlenkrollen umgelenkt wird. Sofern das bahnförmige Material es erfordert, dass kein beidseitiges aufeinanderfolgendes Anliegen an Speicherrollen erfolgen soll, ist eine solche Materialspeichereinrichtung nicht einsetzbar.

Aus der US 2013/0215202 A1 ist eine Vorrichtung zur Pufferung von einem bahnförmigen Material bekannt, bei welcher das bahnförmige Material einer Einlaufzone zugeführt wird und nachfolgend in einer Speicherzone wendelförmig hindurchgeführt ist. Am Ende der Speicherzone wird das bahnförmige Material einer Auslaufzone zum Abführen des bahnförmigen Materials zugeführt.

Eine analoge Speichertrommel ist aus der US 6,257,520 B1 bekannt.

Die DE 28 04 724 A1 offenbart eine Transportvorrichtung für einseitig beschichtetes holografisches Streifenmaterial mit einem Sprührohr zur Behandlung von fotografischem Material, wobei durch einen Sprühdruck des Sprührohres von innen auf das Streifenmaterial ein Anliegen des Streifenmaterials an einer Innenseite von Ringen erfolgt, entlang denen eine spiralförmige Transportbewegung des Materials erfolgt.

Der Erfindung liegt die Aufgabe zugrunde, für ein bahnförmiges Material, auf welches auf einer Seite des bahnförmigen Materials zumindest eine Schicht aufgebracht oder eine Schicht behandelt wurde und anschließend vor der Zuführung für einen weiteren Bearbeitungsschritts gespeichert wird, eine Vorrichtung zur Pufferung des bahnförmigen Materials vorzuschlagen, so dass während der Pufferung des bahnförmigen Materials in einer Speicherzone die zumindest eine aufgebrachte Schicht berührungsfrei durch die Speicherzone hindurchgeführt wird und das Speichervolumen veränderbar ist.

Die der Erfindung zugrundeliegende Aufgabe wird durch eine Vorrichtung zur Pufferung für ein bahnförmiges Material mit zumindest einer einseitig aufgebrachten Schicht gelöst, welche eine Speichertrommel mit einer Einlaufzone, einer Speicherzone und einer Auslaufzone umfasst, durch welche das bahnförmige Material einseitig an der Speichertrommel anliegend durch die Speicherzone hindurchführbar ist. Durch die Ausgestaltung einer solchen Speichertrommel kann eine kompakte Pufferzone für das bahnförmige Material als Endlosband geschaffen werden. Zudem kann durch die Speichertrommel auch eine Speicherung des bahnförmigen Materials mit nur einer einseitigen Anlage an der Speichertrommel erzielt werden.

Das bahnförmige Material wird wendelförmig in der Speicherzone durch die Speichertrommel geführt. Dadurch kann sowohl ein hohes Speichervolumen als auch das Durchlaufen der Speicherzone nur durch eine Rotationsbewegung der Speichertrommel und/oder Speicherwalzen erzielt werden.

Eine Drehachse der Speichertrommel ist bevorzugt in einem Winkel von größer oder kleiner 90° zur Zuführrichtung des bahnförmigen Materials in die Einlaufzone der Speichertrommel ausgerichtet. Dies ermöglicht eine einfache Überführung des bahnförmigen Materials in eine wendelförmige Anordnung in der Speicherzone.

Bevorzugt ist die Auslaufrichtung des bahnförmigen Materials parallel zur Zuführrichtung des Speicherelementes ausgerichtet. Dadurch kann ein einfacher konstruktiver Aufbau der Speichertrommel geschaffen werden.

Die Speichertrommel besteht aus mehreren auf einem gemeinsamen Kreisumfang angeordneten Walzen. Dies weist den Vorteil auf, dass bei der wendelförmigen Anordnung des bahnförmigen Materials in der Speicherzone nur eine bereichsweise Anlage des bahnförmigen Materials gegeben ist, so dass ein Trocknen, Aushärten und/oder Ausreagieren der zumindest einen Schicht auf der Trägerschicht des bahnförmigen Materials begünstigt ist und vor allem die Reibungsfläche minimiert wird, um das Material auf der Bahn halten zu können.

Bei der Speichertrommel, welche aus mehreren auf einem gemeinsamen Kreisumfang angeordneten Walzen besteht, sind die Walzen an einer Führung der Speichertrommel gelagert, durch welche der Abstand der Walzen gemeinsam zur Drehachse veränderbar ist. Dadurch kann der Außenumfang der Speichertrommel vergrößert oder verkleinert werden, wodurch auch das Speichervolumen veränderbar ist. Hierbei müssen die Walzen aber in Segmente unterteilt sein, welche unabhängig voneinander gelagert sind und direkt oder indirekt angetrieben werden können, um die unterschiedlichen Winkelgeschwindigkeiten und Rotationsrichtungen bei der Vergrößerung/Verkleinerung der Speichertrommel zu berücksichtigen.

Zur Zuführung des bahnförmigen Materials durch die Speicherzone hindurch weisen die Walzen bevorzugt am Außenumfang Führungselemente auf. Dadurch kann eine gezielte Anordnung des bahnförmigen Materials zur wendelförmigen Ausrichtung ermöglicht sein. Zudem kann das bahnförmige Material ohne Spannung am Außenumfang der Speichertrommel anliegen und dennoch wendelförmig durch die Speicherzone hindurchgeführt werden.

Die am Außenumfang der jeweiligen Walze angeordnete Führung weist bevorzugt zwei einander gegenüberliegende umläufige Führungselemente auf, welche kegelförmig ausgerichtete Führungsflächen aufweisen. Diese sind bevorzugt derart zueinander ausgerichtet, dass diese der Steigung entsprechen, mit welcher das bahnförmige Material wendelförmig durch die Speicherzone geführt ist. Dadurch kann eine konstruktiv einfache Ausgestaltung zur Führung des bahnförmigen Materials geschaffen sein. Eine weitere bevorzugte Ausgestaltung der Puffervorrichtung sieht vor, dass mehrere Speichertrommeln in Reihe hintereinander geschalten sind. Dadurch kann eine platzsparende Anordnung geschaffen werden, wobei das bahnförmige Material immer nur einseitig anliegend durch die Speicherzone hindurchgeführt wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Puffervorrichtung,
Figur 2 eine schematische Seitenansicht einer Speichertrommel der Puffervorrichtung gemäß Figur 1,
Figur 3 eine schematische Seitenansicht der Speichertrommel gemäß Figur 2 mit einem kleinen Puffervolumen,
Figur 4 eine perspektivische Ansicht einer aus mehreren Walzen gebildeten Speichertrommel gemäß Figur 2,
Figur 5a eine schematische Seitenansicht der Walze zur Bildung der Speichertrommel gemäß Figur 4, und
Figur 5b eine schematische Schnittansicht der Walze gemäß Figur 5b.

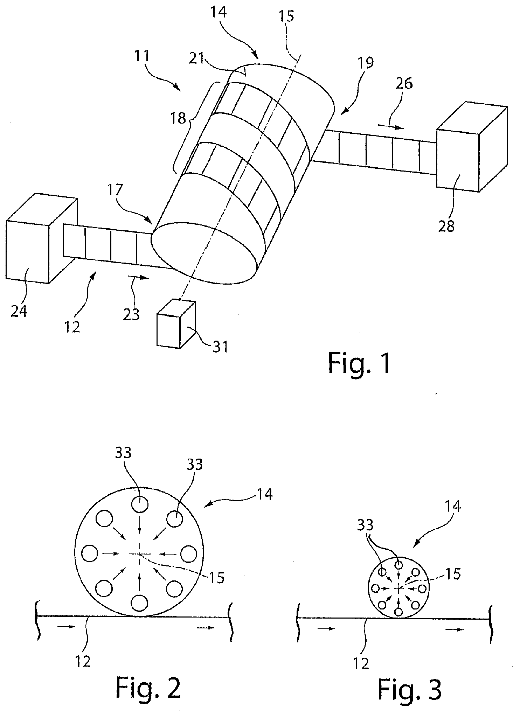

In Figur 1 ist eine schematische Ansicht auf eine Vorrichtung 11 für die Pufferung eines bahnförmigen Materials 12 dargestellt. Das bahnförmige Material 12 ist als Endlosband ausgebildet und weist eine Trägerschicht auf, auf welcher einseitig zumindest eine Schicht oder Beschichtung aufgebracht und/oder behandelt ist. Beispielsweise kann das bahnförmige Material 12 ein holografisches Verbundelement sein, welches aus der DE 10 2014 102 354 A1 bekannt ist, auf welche Bezug genommen wird. Das bahnförmige Material 12 kann aber auch ausschließlich aus der Trägerschicht und einer fließfähigen Schicht ausgebildet sein, welche nach dem Auftragen trocknet, aushärtet und/oder ausreagiert. Auch kann das bahnförmige Material aus einer Trägerschicht mit einer fließfähigen, einseitig aufgebrachten Schicht und zumindest einer darauf aufgebrachten Folie ausgebildet sein, wobei zum Verbinden der zumindest einen aufgebrachten Folie auf die Trägerschicht die fließfähige Schicht trocknet, aushärtet und/oder ausreagiert. Alternativ kann die zumindest eine auf die Trägerschicht aufgebrachte Schicht auch in einem teilweise viskosen Zustand verbleiben, um in einem späteren Bearbeitungsvorgang mit einer darauf aufgebrachten Folie oder Schicht zu trocknen, auszuhärten und/oder zu reagieren.

Die Vorrichtung 11 umfasst eine Speichertrommel 14, welche um eine Drehachse 15 drehbar gelagert ist. Diese Speichertrommel 14 weist eine Einlaufzone 17 auf, der das bahnförmige Material 12 zugeführt wird. Darauffolgend durchläuft das bahnförmige Material 12 eine Speicherzone 18 und wird über eine Auslaufzone 19 von der Speichertrommel 14 abgeführt.

Die Speichertrommel 14 kann als zylindrischer Körper ausgebildet sein, der eine Umfangswand 21 aufweist. Diese Umfangswand 21 oder Außenmantelfläche kann geschlossen oder aber auch mit Durchbrechungen versehen sein. Die Speichertrommel 14 weist in Abhängigkeit des Durchmessers und/oder der Länge eine definierte Größe des Speichervolumens auf.

Der Einlaufzone 17 vorauseilend in Zuführrichtung 23 des bahnförmigen Materials 12 zur Speicherrolle 14 ist eine Bearbeitungsstation 24 vorgesehen. Diese Bearbeitungsstation 24 kann in vielfältiger Weise ausgestaltet sein. Nur beispielsweise kann es sich um eine Auftragsstation oder Beschichtungsstation handeln, um eine fließfähige Schicht oder eine Folie auf ein Trägermaterial aufzubringen. Auch kann es eine Belichtungs- oder Trocknungsstation sein.

Die Zuführrichtung 23 des bahnförmigen Materials 12 ist in einem Winkel abweichend von 90° zur Drehachse 15 der Speichertrommel 14 vorgesehen. Dadurch kann eine wendelförmige Anordnung des bahnförmigen Materials 12 in der Speicherzone 18 erzielt werden. Eine Auslaufrichtung 26 kann rechtwinklig zur Drehachse 15 der Speichertrommel 14 oder in einem Winkel abweichend davon gegeben sein.

Das aus der Auslaufzone 19 herausgeführte bahnförmige Material wird einer weiteren Bearbeitungsstation 28 zugeführt. Diese Bearbeitungsstation 28 kann beispielsweise eine Wickelstation sein, bei der das bahnförmige Material 12 auf eine Rolle aufgewickelt wird. Alternativ kann diese Bearbeitungsstation 28 einen ersten Schritt für die Weiterbearbeitung des bahnförmigen Materials 12 umfassen.

Die Speichertrommel 14 kann durch einen Antrieb 31, welcher lediglich schematisch dargestellt ist, angetrieben werden. Dabei steht die Rotationsgeschwindigkeit der Speichertrommel 14 in Abhängigkeit der Zuführgeschwindigkeit des bahnförmigen Materials 12 in der Einlaufzone 17. Vorzugsweise entspricht die Auslaufgeschwindigkeit des bahnförmigen Materials 12 der Zuführgeschwindigkeit. Dadurch ist das bahnförmige Material spannungsfrei durch die Speicherzone 12 hindurchführbar. Insbesondere weist dies den Vorteil auf, dass bei einem gegebenenfalls erwärmten bahnförmigen Material 12, welches der Speicherzone 18 zugeführt wird, ein Verzug ausbleibt.

In Figur 2 ist eine schematische Seitenansicht einer alternativen Ausführungsform der Speichertrommel 14 zu Figur 1 dargestellt. Bei dieser Ausführungsform ist die Speichertrommel 14 aus mehreren Walzen 33 gebildet, welche auf einem gemeinsamen Kreisumfang angeordnet sind. Die jeweiligen Enden der Walzen 33 sind in einer nicht näher dargestellten Führung gelagert, so dass diese gemeinsam von einem größeren Umfang gemäß Figur 2 auf einen kleineren Umfang, wie dies in Figur 3 dargestellt ist, verfahrbar sind. Dabei werden die Walzen 33 gleichmäßig auf die Drehachse 15 zugeführt, um einen Außendurchmesser der Speichertrommel 14 zu verändern. Eine solche Speichertrommel 14 ermöglicht eine Änderung des Speichervolumens, ohne dass ein Austausch der Speichertrommel 14 mit einer weiteren erforderlich ist.

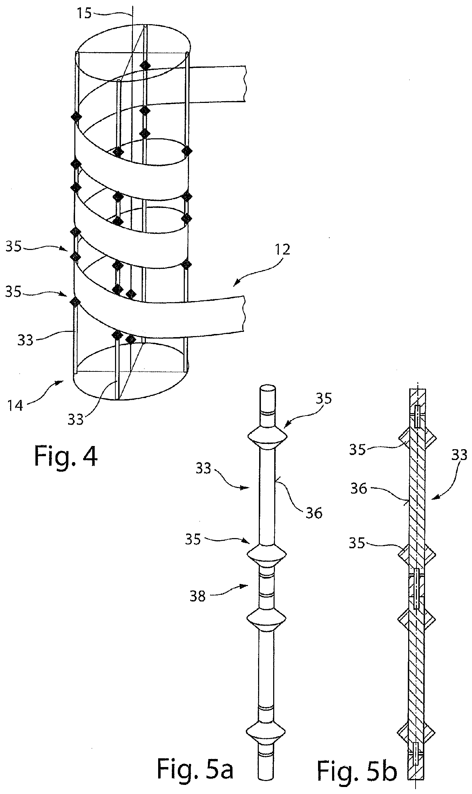

In Figur 4 ist eine schematische Seitenansicht einer alternativen Ausführungsform von Walzen 33 der Speichertrommel 40 gemäß Figur 2 und 3 dargestellt. Bei dieser Ausführungsform ist vorgesehen, dass die Walzen 33 Führungselemente 35 aufweisen, durch welche das bahnförmige Material durch die Speicherzone 18 der Speichertrommel 14 hindurchgeführt wird. Diese Führungselemente 35 sind bevorzugt paarweise einander zugeordnet und weisen einen Abstand auf, welcher der Breite des bahnförmigen Materials 12 entspricht.

In Figur 5a ist eine schematische Seitenansicht einer Walze 33 gemäß der Speichertrommel 14 in Figur 4 dargestellt. Die Figur 5b zeigt eine schematische Schnittansicht der Walze 33 gemäß Figur 5a. Die einander zugeordneten Führungselemente 35 weisen gegenüber einer Führungsfläche 36 der Walze 33, welche auch eine Umfangsfläche der stabförmigen Walzen 33 bildet, eine erhöhte Kontur auf. Die Führungselemente 35 sind bevorzugt kegelförmig, insbesondere doppelkegelförmig ausgebildet, so dass ein- oder beidseitig der Führungselemente 35 eine Führung des bahnförmigen Materials 12 gegeben sein kann. Die Walze 33 ist bevorzugt in mehrere Segmente 37 unterteilt, wobei jedes Segment 37 vorteilhafterweise zwei Führungselemente 35 aufweist, die im Abstand auf die Breite des bahnförmigen Materials 12 angepasst sind. Durch die Ausgestaltung von Segmenten 37 mit Führungselementen 35 und Segmenten 38, welche ohne Führungselemente 35 ausgebildet sind, kann eine entsprechende Steigung zur Führung des bahnförmigen Materials 12 durch die Speicherzone 18 eingestellt werden.

Bei dieser alternativen Ausführungsform ist vorgesehen, dass die Speichertrommel beziehungsweise ein Trägergerüst der Speichertrommel stillsteht und die an dem Trägergerüst angeordneten Walzen 33 jeweils drehbar um ihre eigene Längsachse gelagert sind. Dadurch ist einerseits ein leichtgängiger Transport des bahnförmigen Materials durch die Speicherzone ermöglicht und andererseits eine sichere Führung des bahnförmigen Materials durch die Speicherzone gegeben.

In einem beispielsweise konstruktiv einfachen Aufbau gemäß Figur 5b können die Segmente 37 und Segmente 38 ineinandersteckbar sein.

### Bezugszeichenliste

**Tabelle 1**

| | |
|---|---|
| 11. Puffervorrichtung | 24. Bearbeitungsstation |
| 12. Bahnförmiges Material | 26. Auslaufrichtung |
| 14. Speichertrommel | 28. Bearbeitungsstation |
| 15. Drehachse | 31. Antrieb |
| 17. Einlaufzone | 33. Walze |
| 18. Speicherzone | 35. Führungselement |
| 19. Auslaufzone | 36. Führungsfläche |
| 21. Umfangswand | 37. Segment mit Führungselement |
| 23. Zuführeinrichtung | 38. Segment ohne Führungselement |

## Patentansprüche

1. Vorrichtung zur Pufferung eines bahnförmigen Materials (12) mit zumindest einer einseitig aufgebrachten Schicht, mit einer Speichertrommel (14), welche eine Einlaufzone (17), eine Speicherzone (18) und eine Auslaufzone (19) aufweist, durch welche das bahnförmige Material (12) einseitig in der Speicherzone (18) der Speichertrommel (14) anliegend durch die Speicherzone (18) hindurchführbar ist und das bahnförmige Material (12) wendelförmig in der Speicherzone (18) der Speichertrommel (14) geführt ist und die Speicherzone (18) durchläuft, **dadurch gekennzeichnet, dass** die Speichertrommel (14) aus mehreren, auf einem gemeinsamen Kreisumfang angeordneten Walzen (33) ausgebildet ist, und dass die Walzen (33) an einer Führung der Speichertrommel (14) gelagert und die Walzen (33) gemeinsam im Abstand zu einer Drehachse (15) veränderbar sind.

2. Vorrichtung nach Anspruch 1, **dadurch gekennzeichnet, dass** eine Drehachse (15) der Speichertrommel (14) in einem Winkel größer oder kleiner 90° zur Zuführrichtung (23) des bahnförmigen Materials (12) in die Einlaufzone (17) der Speichertrommel (14) ausgerichtet ist.

3. Vorrichtung nach Anspruch 2, **dadurch gekennzeichnet, dass** das bahnförmige Material (12) in einer Auslaufrichtung (26) parallel zur Zuführrichtung (23) oder in einem Winkel von 90° zur Drehachse (15) der Speichertrommel (14) aus der Auslaufzone (19) herausgeführt ist.

4. Vorrichtung nach Anspruch 1, **dadurch gekennzeichnet, dass** die Walzen (33) der Speichertrommel (14) am Außenumfang Führungselemente (35) aufweisen, durch welche das bahnförmige Material (12) in der Speicherzone (18) geführt ist.

5. Vorrichtung nach Anspruch 4, **dadurch gekennzeichnet, dass** die Führung des bahnförmigen Materials (12) durch zwei einander gegenüberliegende Führungselemente (35) ausgebildet ist, welche kegelförmige Führungsflächen (36) aufweisen.

6. Vorrichtung nach Anspruch 1, **dadurch gekennzeichnet, dass** mehrere Speichertrommeln (14) in Reihe hintereinander anordenbar sind.

## Claims

1. A device for buffering a web-shaped material (12) having at least one layer applied on one side thereof, said device including a storage drum (14) which has an inlet zone (17), a storage zone (18), and an outlet zone (19) by means of which the web-shaped material (12) may be passed through said storage zone (18) in such a manner that one side thereof is applied to the storage zone (18) of the storage drum (14) and that the web-shaped material (12) is guided within the storage zone (18) of the storage drum (14) according to a helical pattern as it passes through the storage zone (18), **characterised in that** the storage drum (14) is formed by a plurality of rollers (33) disposed on a common circumference and **in that** the rollers (33) are supported by a guide of the storage drum (14) and **in that** the distances separating said rollers (33) from an axis of rotation (15) may be varied in conjunction.

2. The device as claimed in claim 1, **characterised in that** an axis of rotation (15) of the storage drum (14) is oriented at an angle greater or smaller than 90° with respect to the feeding direction (23) in which the web-shaped material (12) is supplied to the inlet zone (17) of the storage drum (14).

3. The device as claimed in claim 2, **characterised in that** the web-shaped material (12) leaves the outlet zone (19) in an outlet direction (26) which runs parallel to the feeding direction (23) or extends at an angle of 90° with respect to the axis of rotation (15) of the storage drum (14).

4. The device as claimed in claim 1, **characterised in that** the rollers (33) of the storage drum (14) are provided with guiding elements (35) that are formed on the outer circumference and by means of which the web-shaped material (12) is guided while traversing the storage zone (18).

5. The device as claimed in claim 4, **characterised in that** the guide of the web-shaped material (12) is formed by two opposing guiding elements (35) which have conically-shaped guide surfaces (36).

6. The device as claimed in claim 1, **characterised in that** a plurality of storage drums (14) may be arranged in line one behind the other.

## Revendications

1. Dispositif de tamponnage pour un matériau (12) en forme de bande ayant au moins une couche appliquée sur une face, pourvu d'un tambour de stockage (14) qui présente une zone d'entrée (17), une zone de stockage (18) et une zone de sortie (19) grâce auxquelles le matériau (12) en forme de bande peut être conduit à travers la zone de stockage (18) de manière à reposer avec une seule face contre la zone de stockage (18) du tambour de stockage (14) et grâce auxquelles le matériau (12) en forme de bande est guidé de manière hélicoïdale dans la zone de stockage (18) du tambour de stockage (14) et parcourt ainsi ladite zone de stockage (18), **caractérisé en ce que** le tambour de stockage (14) est formé de plusieurs rouleaux (33) disposés sur une circonférence commune et **en ce que** les rouleaux (33) sont logés sur un guide du tambour de stockage (14) et que l'espacement desdits rouleaux (33) par rapport à un axe de rotation (15) peut être modifié en même temps.

2. Dispositif selon la revendication 1, **caractérisé en ce qu'**un axe de rotation (15) du tambour de stockage (14) est orienté selon un angle supérieur ou inférieur à 90° par rapport à la direction d'amenée (23) suivant laquelle le matériau (12) en forme de bande est amené dans la zone d'entrée (17) du tambour de stockage (14).

3. Dispositif selon la revendication 2, **caractérisé en ce que** le matériau (12) en forme de bande sort de la zone de sortie (19) dans une direction de sortie (26) parallèle à la direction d'amenée (23) ou selon un angle de 90° par rapport à l'axe de rotation (15) du tambour de stockage (14).

4. Dispositif selon la revendication 1, **caractérisé en ce que** les rouleaux (33) du tambour de stockage (14) présentent, sur la circonférence extérieure, des éléments de guidage (35) grâce auxquels le matériau (12) en forme de bande est guidé dans la zone de stockage (18).

5. Dispositif selon la revendication 4, **caractérisé en ce que** le guide du matériau (12) en forme de bande est formé par deux éléments de guidage (35) qui sont situés à l'opposé l'un de l'autre et qui présentent des surfaces de guidage (36) de forme conique.

6. Dispositif selon la revendication 1, **caractérisé en ce que** plusieurs tambours de stockage (14) peuvent être disposés en ligne les uns à la suite des autres.
